# EUROPÄISCHE PATENTSCHRIFT

(11) **EP 1 669 677 B1**
(45) Veröffentlichungstag und Bekanntmachung des Hinweises auf die Patenterteilung: **02.04.2008**
(21) Anmeldenummer: 05109661.8
(22) Anmeldetag: 18.10.2005
(51) Int. Cl.: F24C 7/08, H05B 3/74, A47J 27/62

(54) **Kochfeld**
Cooking hob
Plaque de cuisson

(30) Priorität: 08.12.2004 DE 102004059160
(43) Veröffentlichungstag der Anmeldung: 14.06.2006
(73) Patentinhaber: BSH Bosch und Siemens Hausgeräte GmbH, 81739 München (DE)
(72) Erfinder: Has, Uwe, 84579 Unterneukirchen-Oberschroffen (DE); Vetterl, Peter, 83355 Grabenstätt (DE)

(56) Entgegenhaltungen:
- DE-A1- 10 242 099
- DE-A1- 19 537 909
- DE-U1- 9 416 779
- DE-U1- 29 606 089

## Beschreibung

Die Erfindung betrifft ein Kochfeld mit einer Kochfeldplatte nach dem Oberbegriff des Patentanspruches 1.

Ein derartiges Kochfeld ist bekannt aus der DE 102 42 099 A1, wobei das Kochfeld mindestens eine Kochfeldplatte in einer Kochfeldebene und jeweils eine zugeordnete Sensoreinheit aufweist, die neben der mindestens einen Kochfeldplatte gegenüber dieser leicht erhöht angeordnet ist. Im Bereich der oder jeder Sensoreinheit sind gegenüber der Kochfeldebene erhabene Bereiche angeordnet, wobei die jeweilige Sensoreinheit in den Übergangsbereichen zwischen der Kochfeldebene und den erhabenen Bereichen positioniert ist.

In der DE 19541632 A1 ist eine sensorgesteuerte Garungseinheit beschrieben, die aus einem Gargerät, einer Sensorik und einem Kochfeld besteht. Ein der sensorgesteuerten Garungseinheit zugeordneter Infrarotsensor ist kochstellenbezogen leicht erhöht oberhalb des Kochfeldes angeordnet. Er ist in einer konstruktiven Funktionseinheit integriert, so dass in der sensorgesteuerten Garungseinheit Kochfeld, Gargerät und Sensorik systemhaft miteinander verbunden bzw. aufeinander angepasst und optimiert sind. Das Gargerät ist ein Systemtopf mit einem normierten Emissionsfaktor, der bezogen auf einen Wellenlängenbereich der Infrarotstrahlung zwischen 8 µm und 14 µm liegt. Der Systemtopf hält optimierte Dickenbereiche für den Topfrand und Topfboden ein und weist zwischen Topfdeckel und Topfrand angepasste Kontaktstellen auf.

Dokument DE 195 37 909 beschreibt eine weitere sensorgesteuerte Gärungseinheit.

Bisherige mit einer Infrarotsensorik ausgestattete Kochfelder können nur die beiden hinteren Kochstellen sensorgesteuert kontrollieren und regeln, weil die Infrarotsensoren viel Platz benötigen. Die dafür notwendigen Gehäuse können daher nur in den hinteren Ecken eines Kochfeldes sinnvoll angebracht werden. Um die Optik eines derartigen Kochfeldes nicht unnötig zu beeinträchtigen und den Arbeitsraum am Herd nicht einzuschränken, werden die Sensoren versenkbar angeordnet. Der Versenkmechanismus benötigt zusätzlich Platz. Erst recht für den herkömmlichen Versenkmechanismus steht bei gängigen Konstruktionen derartiger Kochfelder an deren Vorderseite daher kein Platz zur Verfügung.

Die Aufgabe der Erfindung besteht darin, eine Kochfeld bereitzustellen, bei dem eine Temperaturerfassung des Garguts konstruktiv einfach ermöglicht ist.

Diese Aufgabe wird erfindungsgemäß durch ein Kochfeld mit den Merkmalen des Patentanspruchs 1 gelöst. Gemäß dem kennzeichnenden Teil des Anspruchs 1 ist der Temperatursensor durch eine Schwenkbewegung verstellbar. Ein schwenkbar angeordneter IR-Sensor kann in einem Arm angeordnet sein, der auf der einem Bediener zugewandten Seite der Bedienleiste drehbar gelagert ist. Er kann bei Nichtgebrauch in einer gegen Federdruck verrasteten Halterung befestigt sein, die für den Betrieb des Sensors gelöst wird, so dass der Arm federkraftbetrieben bis zu einem Anschlag ausschwingen kann. Diese Anordnung hat auch den Vorteil, dass bei einer Kollision mit dem Bediener der Arm ausweichen, nämlich gegen die Federkraft einschwenken kann. Nach Fortfall der Kollisionskraft richtet die Feder den Arm wieder in die Betriebsstellung auf.
Somit ist eine fertigungstechnische Ausbildung des Temperatursensors in der Kochfeldplatte vermieden. Besonders bevorzugt ist es, wenn der Temperatursensor platzsparend in der Leiste angeordnet ist.

Zusätzlich ist es vorteilhaft, wenn die Leiste als Bedienleiste mit weiteren Bedien- und/oder Anzeigeelementen ausgebildet ist. Somit sind neben dem Temperatursensor auch die Bedien- und/oder Anzeigeelemente auf die Kochfeld-Leiste konzentriert.

Fertigungstechnisch vorteilhaft ist es, wenn der Temperatursensor ortsfest im Bereich der Leiste angeordnet ist. Alternativ kann für eine bessere Positionierung des Temperatursensors gegenüber dem Gargutbehältnis dieser verstellbar angeordnet sein. In diesem Fall kann der Temperatursensor in einer Ruheposition innerhalb der Leiste angeordnet ist, ohne einem Benutzer im Wege zu stehen.

Für eine zuverlässige Halterung in der Leiste kann der Temperatursensor in einem Sensorgehäuse angeordnet sein. Für den Fall, dass das Sensorgehäuse in einer Aussparung der Leiste angeordnet ist, kann das Sensorgehäuse reinigungsfreundlich in etwa bündig mit einer Oberfläche der Leiste abschließen. Dabei kann es vorteilig sein, wenn das Sensorgehäuse des Temperatursensors zusätzlich innerhalb eines Kochfeldrahmens angeordnet ist. Das Sensorgehäuse kann in diesem Fall in den vom Kochfeldrahmen begrenzten Innenraum ragen.

Ergonomisch bevorzugt ist es, wenn die Leiste mit einer Bedienfläche ausgebildet ist, auf der sich die Bedien- und/oder Anzeigeelemente konzentrieren. In gleicher Weise kann die Leiste an einer anderen Stelle mit einer zur Bedienfläche unterschiedlichen Sensorfläche ausgebildet sein, in der der Temperatursensor angeordnet ist. Eine Abgrenzung zwischen Bedienfläche und Sensorfläche kann dadurch erfolgen, dass beide Flächen zueinander abgewinkelt sind. In diesem Fall eignet sich insbesondere eine Leiste, die im Querschnitt im wesentlichen keilförmig mit einer ersten und einer zweiten Flanke ausgebildet ist. Die einem Benutzer zugewandte erste Flanke der Leiste bildet dabei die Bedienfläche, während die dem Kochfeld zugewandte zweite Flanke der Leiste die Sensorfläche bildet.

Die Leiste kann unmittelbar auf einer Arbeitsplatte an einem Rand eines Ausschnitts der Arbeitsplatte liegen, in den das Kochfeld einzusetzen ist. In der Leiste können ein oder mehrere Bedien- und Anzeigeelemente ausgebildet sein. Dazu gehören im Allgemeinen ein Display und z. B. Piezo-Bedienelemente. Diese können in Ausnehmungen angeordnet, die auf der dem Bediener abgewandten Unterseite des Profils ausgebildet sind.

Nach einer weiteren Ausgestaltung der Erfindung kann der als Infrarot-Sensor (IR-Sensor) ausgebildete Temperatursensor ortsfest in der Bedienleiste angeordnet sein. Je nach Größe des IR-Sensors kann er entweder vollständig innerhalb des Profils der Leiste oder von dort bis in den Kochfeldrahmen hineinragend befestigt sein. Vorzugsweise beansprucht er nur innerhalb des Profils der Leiste und nicht auch im Kochfeldrahmen einen Raum. Reicht der Sensor bis in den Kochfeldrahmen, so muss entweder der Ausschnitt in der Arbeitsplatte vergrößert werden - was zusätzlichen Montageaufwand erfordert und daher unerwünscht ist - oder die Kochfeldplatte muss bei gleichbleibendem Ausschnitt zugunsten des Sensors verkleinert werden. Je nach Platzverhältnis kann aber auch eine verkleinerte Kochfeldplatte nicht wünschenswert sein.

Der IR-Sensor ist auf einen auf der Topfaußenwand gebildeten Messfleck gerichtet. Der Messfleck darf nicht zu nahe am Topfboden liegen, um nicht zu sehr von der Wärmekapazität des Topfbodens beeinflusst zu werden. Er liegt in aller Regel zwischen 35 mm und 50 mm über der Oberseite der Kochfeldplatte. Die Leiste dagegen überragt die Arbeitsplatte aber nur um etwa 10 mm. Der in der Leiste angeordnete IR-Sensor betrachtet demzufolge die Kochtopfaußenwand in einem Einfallswinkel auf die Topfaußenwand zwischen etwa 30° und 60°. Dieser Winkel beeinträchtigt die Funktion des IR-Sensors jedoch nicht, weil der Topf an der Kochtopfaußenwand mit einer Beschichtung versehen ist, die eine ausreichend gute Emission gewährleistet. Die Beschichtung besteht im Allgemeinen aus einem Emaillestreifen und hat die Charakteristik eines Lambert-Strahlers, der in alle Richtungen ungerichtet abstrahlt. Daher kann der IR-Sensor die vom Topf ausgehende Strahlung auch unter einem Einfallswinkel erfassen.

Die Anordnung des IR-Sensors in der Leiste hat damit den Vorteil, dass während des Einsatzes des IR-Sensors keine aus der Ebene der Kochfeldplatte aufragenden Teile die Bedienung des Kochfeldes einschränken oder behindern. Die in die Leiste integrierte Anordnung des IR-Sensors vereinfacht außerdem auch die Pflege des Kochfeldes, weil keine bewegbaren Teile vorhanden sind, die einer besonderen Behandlung bedürften.

Bei einer schwenkbaren Vorrichtung für den IR-Sensor in der Leiste kann ein Arm gewählt werden, der die gesamte Breite des Profils der Bedienleiste einnimmt. Aus Betrachtersicht weist die Bedienleiste in einem solchen Fall lediglich zwei quer verlaufende Fugen je Sensorarm auf. Der Arm kann aber auch nahezu jeden anderen Ausschnitt aus der Ansichtsfläche der Bedienleiste ausmachen.

Alternativ zu einer schwenkbaren Anordnung kann der Sensor nach einer weiteren vorteilhaften Ausgestaltung der Erfindung aus der Leiste in einer Linearbewegung ausfahrbar angeordnet sein. Er ist dann vorzugsweise in einem dem Bediener abgewandten Bereich der Leiste und einem der Kochfeldplatte zugewandten Bereich angeordnet, damit er eine geringere Distanz zum Kochtopf erhält. Der IR-Sensor weist dann eine den herkömmlichen Konstruktionen vergleichbare Anordnung auf. Auch in dieser Variante kann er gegen Federkraft vorgespannt und bei Nichtgebrauch in einer verrastbaren Halterung befestigt sein.

Welcher der beiden grundsätzlichen Anordnungsmöglichkeiten der Vorzug gegeben wird, ist im Wesentlichen von den jeweiligen Platzverhältnissen abhängig. Während die schwenkbare Variante einen geringeren bzw. keinen Platzbedarf in der Tiefe - also unterhalb der Bedienleiste - hat, aber einen Großteil der Breite der Bedienleiste einnehmen muss, um den IR-Sensor in die gewünschte Höhe zu bringen, benötigt der ausfahrbare IR-Sensor zwar nur einen geringen Teil der Ansichtsfläche der Bedienleiste, dafür aber umso mehr Platz in der Tiefe. Dafür kann entweder eine Vergrößerung des Ausschnitts der Arbeitsplatte oder bei unverändertem Ausschnitt eine Verkleinerung der Kochfeldplatte erforderlich werden.

Nachfolgend ist ein Ausführungsbeispiel der Erfindung anhand von Figuren beschrieben.
Es zeigen:
- Figur 1: einen starr in einer Bedienleiste angeordneten IR-Sensor,
- Figuren 2, 3: einen ersten schwenkbaren IR-Sensor in seiner Ruhe- und Gebrauchsposition, und
- Figuren 4, 5: einen zweiten schwenkbaren IR-Sensor in einer Ruhe- und einer Gebrauchsposition.

Ein Kochfeld 1 umfasst eine Platte 2, die auf einem Kochfeldrahmen 3 aufliegt. In der Ebene der Platte 2 und aus Sicht eines Bedieners vor ihr ist ein Profil 4 für eine Bedienleiste angeordnet. Sie ruht teilweise ebenfalls auf dem Kochfeldrahmen 3 und schließt in diesem Bereich unmittelbar an einen vorderen Rand 5 der Platte 2 an, die dem Bediener zugewandt ist. Im Übrigen liegt sie auf einer Arbeitsplatte 14 auf, in die ein Ausschnitt zum Einsetzen des Kochfelds 1 eingeschnitten ist.

Im Profil 4 sind als Bedienelemente nicht dargestellte Drucktasten und ein Anzeigenelement 6 angeordnet. Auf der Platte 2 des Kochfeldes 1 befindet sich ein Systemtopf 7, der in einer Höhe zwischen 35 mm und 50 mm über der Oberseite der Platte 2 einen emaillierten Streifen 8 aufweist. Die Emaillierung 8 auf der Außenwand des Topfes 7 bewirkt, dass der Topf 7 an dieser Stelle in einem Wellenlängenbereich zwischen 4 µm und 8 µm einen Infrarot-Emissionsfaktor von nahezu 1 aufweist.

Diese Abstrahlcharakteristik des Topfes 7 begünstigt die Detektion der IR-Wärmestrahlung durch einen Infrarotsensor 9. Er ist in einem der Platte 2 zugewandten Abschnitt des Profils 4 untergebracht und in einem Winkel von etwa 60° gegenüber der waagrechten Platte 2 auf den Emaillestreifen 8 gerichtet. Zum Schutz gegen Verschmutzungen und Beschädigungen ist der Infrarotsensor 9 hinter einem Fenster 10 in dem Profil 4 angeordnet.

Das Profil 4 bildet eine Nase 11 aus, mit der es die Platte 2 geringfügig überragt. Damit wird ein optisch ansprechender Übergang zwischen der Platte 2 und dem Profil 4 erzielt. Außerdem verdeckt die Nase 11 eine Dichtung 12. Die Dichtung 12 stützt sich einerseits gegen den vorderen Rand 5 der Platte 2 und andererseits gegen eine Flanke 13 an dem Profil unterhalb der Nase 11 ab. Die Nase 11 schützt demzufolge die Dichtung 12 insbesondere gegen mechanische Beschädigungen beispielsweise beim Reinigen der Herdplatte 2 und stellt somit deren Funktion dauerhaft sicher.

Durch seine Anordnung in dem Profil 4 kann der Sensor 9 einerseits bestimmungsgemäß die Wärmestrahlung auf der Außenwand des Kochtopfs 7 abfühlen. Andererseits ist er gegen ungewollte Beschädigungen insbesondere durch das Umsetzen von Töpfen 7 auf der Herdplatte 2 gut geschützt.

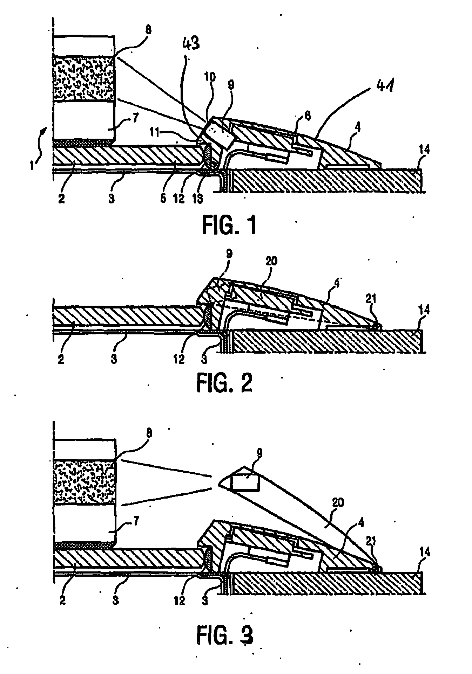

Gemäß der Figur 1 ist die Leiste 4 im Querschnitt im wesentlichen keilförmig mit einer ersten und einer zweiten Flanke ausgebildet. Die einem Benutzer zugewandte erste Flanke der Leiste 4 bildet eine Bedienfläche 41. Die dem Kochfeld zugewandte zweite Flanke der Leiste 4 bildet eine Sensorfläche 43, in der der IR-Sensor 9 angeordnet ist. Zur Abgrenzung der Sensorfläche 43 und der Bedienfläche 41 sind beide Flächen zueinander abgewinkelt.

Eine erste konstruktive Alternative zu dem ortsfest eingebauten Infrarotsensor 9 der Figur 1 stellen die Figuren 2 und 3 dar. Der dortige IR-Sensor 9 ist in einem schwenkbaren Arm 20 untergebracht, dessen Länge etwa der Breite des Profils 4 entspricht. Der Arm 20 ist an seinem einen Ende im Profil 4 an dessen dem Bediener zugewandten Rand drehbar gelagert. Der Arm 20 kann von einer Ruheposition in eine Betriebsposition überführt werden. In seiner in Figur 2 dargestellten Ruheposition schließen die Begrenzungsflächen des Arms 20 bündig mit denen des Profils 4 ab. In dieser Position wird er durch eine nicht dargestellte Verrastung gehalten, die zugleich eine Feder vorspannt. Wird die Verrastung gelöst, so drückt die Feder den Arm 20 in eine in Figur 3 dargestellte Betriebsposition. Dabei schwingt der Arm 20 in eine Richtung auf den Bediener hin nach oben. Der IR-Sensor 9 ist an dem anderen Ende des Arms 20 angeordnet, das dem Ende mit der Lagerung 21 gegenüberliegt. Beim Ausschwenken des Arms 20 in seine Betriebsposition, die durch einen Anschlag definiert wird, gelangt der IR-Sensor 9 in etwa auf die gleiche Höhe wie der Emaillestreifen 8 am Topf 7. Damit kann der IR-Sensor 9 horizontal und damit in einem Einfallwinkel von 90° Grad auf die Außenwand des Topfes 7 blicken.

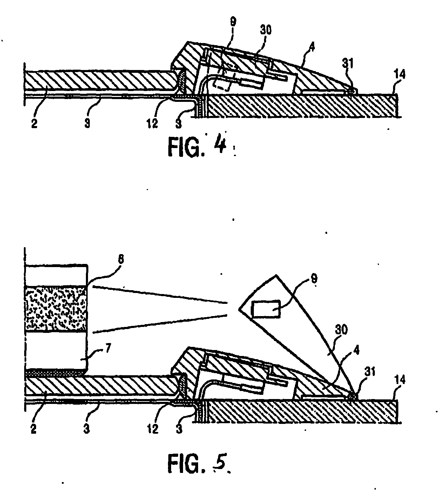

Eine alternative Ausführungsform zu einem schwenkbaren Sensorarm stellen die Figuren 4 und 5 dar. Der dortige Arm 30 weist eine mit der zuletzt beschriebenen Ausführungsform vergleichbare Lagerung 31 auf. Der Arm 30 besitzt jedoch eine kürzere Länge als der vorher beschriebene Arm 20, weil er nur einen Teil der Breite des Profils 4 umfasst. Der vergleichbar im Arm 30 angeordnete IR-Sensor 9 kann demzufolge bei einem gleichen Öffnungswinkel in einer Betriebsposition (Figur 5) nur eine geringere Höhe über der Oberfläche der Platte 2 erreichen.

## Patentansprüche

1. Kochfeld mit einer Kochfeldplatte (2) zum Abstellen zumindest eines Gargutbehältnisses (7), die durch zumindest eine Leiste (4) begrenzt ist, und mit zumindest einem Temperatursensor (9) zum Ermitteln einer Garguttemperatur, wobei der Temperatursensor (9) außerhalb der Kochfeldplatte (2) im Bereich der Leiste (4) angeordnet ist, **dadurch gekennzeichnet, dass** der Temperatursensor (8) durch eine Schwenkbewegung verstellbar ist.

2. Kochfeld nach Anspruch 1, **dadurch gekennzeichnet, dass** die Leiste (4) im Querschnitt im Wesentlichen keilförmig mit einer ersten und einer zweiten Flanke ausgebildet ist und dass die, einem Benutzer zugewandte erste Flanke der Leiste (4) die Bedienfläche (41) bildet und dass die dem Kochfeld zugewandte zweite Flanke der Leiste (4) die Sensorfläche (43) bildet.

3. Kochfeld nach Anspruch 1 oder 2, **dadurch gekennzeichnet, dass** der Temperatursensor (9) in der Leiste (4) angeordnet ist.

4. Kochfeld nach Anspruch 1, 2 oder 3, **dadurch gekennzeichnet, dass** in der Leiste (4) zusätzlich Bedien- und/oder Anzeigeelemente (20) ausgebildet ist.

5. Kochfeld nach einem der vorhergehenden Ansprüche, **dadurch gekennzeichnet, dass** der Temperatursensor (9) ein Infrarot-Sensor ist.

6. Kochfeld nach Anspruch 5, **dadurch gekennzeichnet, dass** der Infrarot-Sensor (9) für eine Ermittelung der Garguttemperatur auf eine Seitenwand (8) des Garbehältnisses (7) gerichtet ist.

7. Kochfeld nach Anspruch 5 oder 6, **dadurch gekennzeichnet, dass** die Leiste (4) zusammen mit dem Temperatursensor (9) im Wesentlichen in der Ebene der Kochfeldplatte (2) angeordnet ist.

8. Kochfeld nach einem der vorhergehenden Ansprüche, **dadurch gekennzeichnet, dass** der Temperatursensor (9) ortsfest angeordnet ist.

9. Kochfeld nach einem der Ansprüche 1 bis 7, **dadurch gekennzeichnet, dass** der Temperatursensor (9) verstellbar angeordnet ist.

10. Kochfeld nach Anspruch 9, **dadurch gekennzeichnet, dass** der Temperatursensor (8) zwischen einer Ruheposition und einer Betriebsposition verstellbar ist.

11. Kochfeld nach Anspruch 10, **dadurch gekennzeichnet, dass** der Temperatursensor (8) in seiner Ruheposition innerhalb der Leiste (4) angeordnet ist.

12. Kochfeld nach einem der Ansprüche 10 oder 11, **dadurch gekennzeichnet, dass** der Temperatursensor (8) durch eine Linearbewegung verstellbar ist.

13. Kochfeld nach einem der vorhergehenden Ansprüche, **dadurch gekennzeichnet, dass** der Temperatursensor (8) in einem Sensorgehäuse (20; 40) angeordnet ist.

14. Kochfeld nach Anspruch 13, **dadurch gekennzeichnet, dass** das Sensorgehäuse (20; 30; 40) in einer Aussparung der Leiste (4) angeordnet ist.

15. Kochfeld nach einem der vorhergehenden Ansprüche, **dadurch gekennzeichnet, dass** der Temperatursensor (8) oder sein Sensorgehäuse (20; 30; 40) zumindest teilweise innerhalb eines Kochfeldrahmens (3) angeordnet ist.

16. Kochfeld nach einem der vorhergehenden Ansprüche, **dadurch gekennzeichnet, dass** die Leiste (4) mit einer Bedienfläche (41) ausgebildet ist, in der die Bedien- und Anzeigeelemente (20) angeordnet sind.

17. Kochfeld nach einem der vorhergehenden Ansprüche, **dadurch gekennzeichnet, dass** die Leiste (4) mit einer Sensorfläche (43) ausgebildet ist, in der der Temperatursensor (9) angeordnet ist.

18. Kochfeld nach Anspruch 17, **dadurch gekennzeichnet, dass** die Sensorfläche (43) gegenüber der Bedienfläche (41) der Leiste (4) abgewinkelt ist.

## Claims

1. Cooker hob with a cooker hob plate (2) for setting down at least one cooking stock container (7), which is bounded by at least one strip (4), and with at least one temperature sensor (9) for detecting a cooking stock temperature, wherein the temperature sensor (9) is arranged outside the cooker hob plate (2) in the region of the strip (4), **characterised in that** the temperature sensor (8) is adjustable by a pivot movement.

2. Cooker hob according to claim 1, **characterised in that** the strip (4) is constructed to be substantially wedge-shaped in cross-section with a first and second flank and that the first flank, which faces a user, of the strip (4) forms the control surface (41) and that the second flank, which faces the cooker hob, of the strip (4) forms the sensor surface (43).

3. Cooker hob according to claim 1 or 2, **characterised in that** the temperature sensor (9) is arranged in the strip (4).

4. Cooker hob according to claim 1, 2 or 3, **characterised in that** additional control and/or indicating elements (20) are formed in the strip (4).

5. Cooker hob according to one of the preceding claims, **characterised in that** the temperature sensor (9) is an infrared sensor.

6. Cooker hob according to claim 5, **characterised in that** the infrared sensor (9) is directed towards a side wall (8) of the cooking container (7) for detection of the cooking stock temperature.

7. Cooker hob according to claim 5 or 6, **characterised in that** the strip (4) together with the temperature sensor (9) is arranged substantially in the plane of the cooker hob plate (2).

8. Cooker hob according to one of the preceding claims, **characterised in that** the temperature sensor (9) is arranged to be stationary.

9. Cooker hob according to one of claims 1 to 7, **characterised in that** the temperature sensor (9) is arranged to be adjustable.

10. Cooker hob according to claim 9, **characterised in that** the temperature sensor (8) is adjustable between a rest position and an operating position.

11. Cooker hob according to claim 10, **characterised in that** the temperature sensor (8) is arranged in its rest position within the strip (4).

12. Cooker hob according to one of claims 10 and 11, **characterised in that** the temperature sensor (8) is adjustable by a linear movement.

13. Cooker hob according to one of the preceding claims, **characterised in that** the temperature sensor (8) is arranged in a sensor housing (20; 40).

14. Cooker hob according to claim 13, **characterised in that** the sensor housing (20; 30; 40) is arranged in a cut-out of the strip (4).

15. Cooker hob according to one of the preceding claims, **characterised in that** the temperature sensor (8) or its sensor housing (20; 30; 40) is arranged at least partly within a cooker hob frame (3).

16. Cooker hob according to one of the preceding claims, **characterised in that** the strip (4) is formed with a control surface (41) in which the control and indicating elements (20) are arranged.

17. Cooker hob according to one of the preceding claims, **characterised in that** the strip (4) is constructed with a sensor surface (43) in which the temperature sensor (9) is arranged.

18. Cooker hob according to claim 17, **characterised in that** the sensor surface (43) is angled relative to the control surface (41) of the strip (4).

## Revendications

1. Plaque de cuisson qui présente un plateau (2) de plaque de cuisson sur lequel on peut placer au moins un récipient (7) à produit à cuire, lequel plateau est délimité par au moins un rebord (4), la plaque de cuisson étant dotée d'au moins un capteur de température (9) qui permet de déterminer la température du produit à cuire, le capteur de température (9) étant disposé dans la zone du rebord (4), à l'extérieur du plateau (2) de la plaque de cuisson, **caractérisée en ce que** le capteur de température (8) peut être ajusté par un déplacement de pivotement.

2. Plaque de cuisson selon la revendication 1, **caractérisée en ce que** le rebord (4) a une section transversale essentiellement en biseau et présente un premier et un deuxième flanc et **en ce que** le premier flanc du rebord (4), tourné vers l'utilisateur, forme la surface de commande (41) et **en ce que** le deuxième flanc du rebord (4), tourné vers la plaque de cuisson, forme la surface de détection (43).

3. Plaque de cuisson selon les revendications 1 ou 2, **caractérisée en ce que** le capteur de température (9) est disposé dans le rebord (4).

4. Plaque de cuisson selon les revendications 1, 2 ou 3, **caractérisée en ce que** des éléments supplémentaires de commande et/ou d'affichage (20) sont formés dans le rebord (4).

5. Plaque de cuisson selon l'une des revendications précédentes, **caractérisée en ce que** le capteur de température (9) est un capteur à infrarouge.

6. Plaque de cuisson selon la revendication 5, **caractérisée en ce que** le capteur à infrarouge (9) est destiné à déterminer la température du produit à cuire sur la paroi latérale (8) du récipient (7) à produit à cuire.

7. Plaque de cuisson selon les revendications 5 ou 6, **caractérisée en ce que** le rebord (4) est disposé avec le capteur de température (9) essentiellement dans le plan du plateau (2) de la plaque de cuisson.

8. Plaque de cuisson selon l'une des revendications précédentes, **caractérisée en ce que** le capteur de température (9) est disposé en position fixe.

9. Plaque de cuisson selon l'une des revendications 1 à 7, **caractérisée en ce que** le capteur de température (9) est disposé de manière ajustable.

10. Plaque de cuisson selon la revendication 9, **caractérisée en ce que** le capteur de température (8) peut être déplacé entre une position de repos et une position de travail.

11. Plaque de cuisson selon la revendication 10, **caractérisée en ce que** le capteur de température (8) est disposé à l'intérieur du rebord (4) lorsqu'il est en position de repos.

12. Plaque de cuisson selon l'une des revendications 10 ou 11, **caractérisée en ce que** le capteur de température (8) peut être déplacé par un déplacement linéaire.

13. Plaque de cuisson selon l'une des revendications précédentes, **caractérisée en ce que** le capteur de température (8) est disposé dans un boîtier de capteur (20; 40).

14. Plaque de cuisson selon la revendication 13, **caractérisée en ce que** le boîtier de capteur (20; 30; 40) est disposé dans un évidement ménagé dans le rebord (4).

15. Plaque de cuisson selon l'une des revendications précédentes, **caractérisée en ce que** le capteur de température (8) ou son boîtier de capteur (20; 30; 40) sont disposés au moins en partie à l'intérieur d'un encadrement (3) de la plaque de cuisson.

16. Plaque de cuisson selon l'une des revendications précédentes, **caractérisée en ce que** le rebord (4) est configuré avec une surface de commande (41) dans laquelle sont disposés les éléments de commande et d'affichage (20).

17. Plaque de cuisson selon l'une des revendications précédentes, **caractérisée en ce que** le rebord (4) est configuré avec une surface de détection (43) dans laquelle est disposé le capteur de température (9).

18. Plaque de cuisson selon la revendication 17, **caractérisée en ce que** la surface de détection (43) est inclinée par rapport à la surface de commande (41) du rebord (4).
